# EUROPÄISCHE PATENTSCHRIFT

(11) **EP 3 293 406 B1**
(45) Veröffentlichungstag und Bekanntmachung des Hinweises auf die Patenterteilung: **21.09.2022**
(21) Anmeldenummer: 17180448.7
(22) Anmeldetag: 10.07.2017
(51) Int. Cl.: F16C 33/10, F01D 25/16, F16C 17/04, F16C 17/10

(54) **HYDRODYNAMISCHES GLEITLAGER UND ABGASTURBOLADER**
HYDRODYNAMIC BEARING AND TURBOCHARGER
PALIER HYDRODYNAMIQUE ET TURBOCOMPRESSEUR

(30) Priorität: 13.09.2016 DE 202016105071 U
(43) Veröffentlichungstag der Anmeldung: 14.03.2018
(73) Patentinhaber: BMTS Technology GmbH & Co. KG, 70376 Stuttgart (DE); Berger, Martin, 75038 Oberderdingen (DE)
(72) Erfinder: Berger, Martin, 75038 Oberderdingen (DE); Kleinschmidt, Rüdiger, 74354 Besigheim (DE); Stetter, Frieder, 70597 Stuttgart (DE); Schmitt, Steffen, 71254 Ditzingen (DE); Kuhne, Oliver, 70374 Stuttgart (DE)
(74) Vertreter: Herrmann, Jochen

(56) Entgegenhaltungen:
- WO-A1-2016/146189
- WO-A1-2016/146190
- DE-A1-102013 110 409
- JP-A- H0 932 849
- JP-U- S5 594 914
- US-A- 3 447 841

## Beschreibung

Die Erfindung betrifft ein hydrodynamisches Gleitlager mit einem Stator und einem relativ zum Stator verdrehbarem Rotor, wobei eine Rotor-Lagerfläche einer Gegenfläche des Stators zur hydrodynamischen Druckerzeugung gegenübersteht.

Die Erfindung betrifft weiterhin einen Abgasturbolader mit einem hydrodynamischen Gleitlager.

Rotierende Maschinenelemente, wie z.B. Wellen, Laufrollen, Zahn- oder Pumpenräder benötigen eine Führung in radialer und axialer Richtung um Kräfte und Drehmomente übertragen zu können. Diese Aufgabe kann von hydrodynamisch wirkenden Gleitlagern übernommen werden. Die Funktion dieses Lagertyps basiert auf dem physikalischen Prinzip der hydrodynamischen Druckerzeugung. Zwischen dem Rotor und dem Stator ist bei hydrodynamischen Gleitlagern ein geeigneter Schmierstoff gehalten. Bei einer Drehbewegung des Rotors relativ zum Stator entstehen im Schmierstoff Scherkräfte, die diesen dann mit einer bestimmten Geschwindigkeit durch das Lager transportieren. Bei einem konvergierenden Lagerspalt ergibt sich hieraus ein hydrodynamischer Druckanstieg, bei divergierendem Spaltverlauf - im Anschluss an den konvergierenden Lagerspalt, entsteht ein Druckabfall. Ist die Relativgeschwindigkeit zwischen Rotor und Stator ausreichend hoch, baut sich durch den hydrodynamischen Druck eine ausreichend dicke Schmierstoffschicht auf, welche die beiden Gleitpartner voneinander trennt. Die Reibung findet in diesem Betriebszustand in der Schmierstoffschicht statt (Flüssigkeitsreibung). Die so erzeugten hydrodynamischen Drücke halten in Verbindung mit der eingesetzten Fläche den äußeren Kräften das Gleichgewicht und beschreiben die Tragfähigkeit des Gleitlagers. Zur Erzeugung des hydrodynamischen Drucks wird keine zusätzliche Energie in Form von Druckarbeit bzw. ein Schmierstoffvolumen, welches mit einem bestimmten Druck über Nuten oder Taschen zugeführt wird, benötigt. Die Tragfähigkeit ergibt sich aus den Betriebsgrößen. Die Grundlagen zur nummerischen Berechnung des hydrodynamischen Drucks sind in der DIN 31562 Teil 1 (DIN Taschenbuch 198; Gleitlager 2; Beuth Verlag GmbH; Berlin, Köln 1991) dargestellt.

Zum Stand der Technik gehören zwei grundsätzliche Lagertypen:
1. Hydrodynamische Radialgleitlager
   Hydrodynamische Radialgleitlager werden häufig in Form von zylindrischen Buchsen als segmentierte Variante oder als Kippsegmentlager ausgeführt. Siehe hierzu (DIN 31562 Teil 2 und VDI-Richtlinien 2204). Die hydrodynamisch wirksamen Elemente (z.B. Segmente) des Gleitlagers sind zylindrisch und damit parallel zur Rotationsachse angeordnet. Der konvergierende Spaltverlauf ergibt sich aus der exzentrischen Lage vom Rotor zum Stator.
2. Hydrodynamische Axialgleitlager
   Hydrodynamische Axialgleitlager werden in Form einer Anlaufscheibe mit diversen Nuten bzw. Oberflächenmodifikationen in Form von Staurändern, Keilflächen oder Spiralrillen ausgebildet. Sie können auch als so genanntes Kippsegment-Lager gestaltet sein (siehe hierzu DIN 31563 Teil 1 bis 3; DIN 31564 Teil 1 bis 3). Die Anordnung des Axialgleitlagers erfolgt dabei orthogonal zur Rotationsachse, mit einer in der Regel rotierenden Spurscheibe als Gegenlaufpartner. Der für die hydrodynamische Druckerzeugung benötigte konvergierende Spaltverlauf ergibt sich aus der Gestaltung der Oberflächenstrukturen (Taschen, Rampen, etc.), durch die Neigung der kippbeweglichen Segmente oder einem Winkelversatz zwischen Lager zur Spurscheibe.

Wenn bei einer technischen Lösung sowohl radiale als auch axiale Lasten entstehen, so müssen beide vorgenannten Lagertypen zum Einsatz kommen. Die Axiallasten werden dann über ein Axialgleitlager und die Radiallasten über das Radialgleitlager abgetragen. Eine derartige Lösung ist in der DE 4217268 C2 beschrieben. Die beiden Lagertypen sind dann jeweils getrennt voneinander zu berechnen und auszulegen, wodurch sowohl bei der Konstruktion als auch bei der Produktion entsprechend hohe Kosten entstehen.

Aus diesem Grund werden bei solchen Lastfällen häufig hydrostatische Gleitlager eingesetzt, die entsprechend ausgelegt sind. Dabei wird der Einsatz einer Druckpumpe erforderlich die, wie vorstehend erwähnt, einen permanenten Energiebedarf hat. Derartige Lösungen sind in der Druckschrift US 2,710,234 A beschrieben.

Eine weitere Möglichkeit besteht darin sogenannte Spiralrillen in die Rotor-Lagerfläche einzubringen um darüber einen Druckaufbau zu erzeugen. Derartige Lösungen sind in der Druckschrift US 3,265,452 A beschrieben. Solche Rillen bedingen einen zusätzlichen Fertigungsaufwand.

Eine weitere Möglichkeit radiale als auch axiale Lasten zu tragen besteht darin, sogenannte sphärischen Lager oder Gelenklager (EP1482189A1) bzw. Kugelgelenke (DE10028984C2) einzusetzen. Diese sind jedoch nicht für stationär hohe Gleitgeschwindigkeiten durch Rotation des Gegenkörpers (Rotors) um seine Achse konzipiert. Vielmehr besteht die Aufgabe solcher Lager in der kippbeweglichen bzw. ausgleichenden Lagerung von Wellenversatz. Bekannt sind hier Gelenkaugen, wie sie z.B. bei Hydraulikzylindern eingesetzt werden. Die gleiche Funktion übernehmen auch Hüftgelenksprothesen z.B. nach (WO0154613A2).

Aus der DE 10 2008 059 598 A1 ist ein Abgasturbolader bekannt. Dieser weist eine Welle auf, die an ihren Enden ein Turbinenrad bzw. ein Verdichterrad trägt. Die Welle ist mittels zweier hydrodynamischer Gleitlager in einem Gehäuse gelagert. Diese sind in Form von Kegellagern ausgeführt.

Ein weiterer Abgasturbolader ist in der WO 2014/105377 A1 und der EP 1972759 beschrieben.

Ein weiteres hydrodynamisches Gleitlager ist aus der DE 10 2013 110 409 A1 bekannt. Es ist Aufgabe der Erfindung, ein hydrodynamisches Gleitlager bzw. einen Abgasturbolader mit einem hydrodynamischen Gleitlager bereitzustellen, wobei verbesserte Anwendungseigenschaften erreicht sind.

Diese Aufgabe wird mit den Merkmalen der Ansprüche 1 bzw. 15 gelöst.

Erfindungsgemäß ist es mithin vorgesehen, dass die Rotor-Lagerfläche und/oder die Gegenfläche bei einem Schnitt längs und durch die Rotationsachse in Schnittansicht eine durchgehende Lagerkontur bildet, die aus wenigstens zwei Konturabschnitten gebildet ist, wobei die Konturabschnitte geeignet sind hydrodynamische Tragfähigkeit in radialer und axialer Richtung zu erzeugen, wobei die Konturabschnitte mittels wenigstens eines Übergangsabschnitts derart ineinander übergeleitet sind, dass hydrodynamische Tragfähigkeit über die Konturabschnitte und den Übergangsabschnitt erzeugbar ist, und dass das Gleitlager als Mehrflächengleitlager mit zwei oder mehreren Schmierkeilen im Bereich der Konturabschnitte und des Übergangsabschnittes ausgebildet ist.

Durch die Segmentierung der Lagerung sowohl im Bereich der Konturabschnitte als auch insbesondere im Bereich des Übergangsabschnitts wird eine Verringerung der Reibungswerte erreicht. Darüber hinaus verbessert sich bei diesem Lager auch die Lagerdruckübergabe vom Radiallagerbereich in den Axiallagerbereich. Dadurch dass mit dem Übergangsabschnitt ein kontinuierlicher Übergang zwischen den einzelnen Konturabschnitten geschaffen ist, die für die axiale und radiale Tragfähigkeit zuständig sind, kann bei gleichbleibender Reibleistung eine Steigerung der Tragfähigkeit oder alternativ eine Reibleistungsverringerung erreicht werden. Über die Segmentierung der Lageranordnung wird aktiv die Entstehung von Instabilitäten in Form von Halbfrequenzwirbel bzw. Oilwhirls reduziert. Dies führt zu einer geringeren Geräusch-Emission des hydrodynamischen Gleitlagers. Darüber sinken hierdurch die inneren und äußeren Lagerbelastungen erheblich. Das erfindungsgemäße Gleitlager bewirkt auch eine erhöhte Pumpwirkung, was zu einer Verringerung des Öldruckbedarfs führt.

Gemäß der Erfindung ist es vorgesehen, dass zumindest ein Teil der Schmierkeile der Konturabschnitte und des Übergangsabschnittes derart ineinander übergeleitet sind, das sich in Lagerachsrichtung ein stetig differenzierbarer Konturverlauf ergibt. Auf diese Weise wird eine durchgängige und unterbrechungsfreie Tragfähigkeit über die Konturabschnitte und den Übergangsabschnitt erreicht.

Eine denkbare Erfindungsalternative ist dergestalt, dass die in Lagerachsrichtung ineinander übergeleiteten Konturabschnitte und der wenigstens eine Übergangsabschnitt jeweils Segmente bilden, und dass die Segmente dieser Konturabschnitte und des wenigstens einen Übergangsabschnitts ein Lagersegment bilden. Auf diese Weise kann ein hydrodynamisches Gleitlager mit mehreren Lagersegmenten aufgebaut werden, die in Umfangsrichtung verteilt angeordnet sind. Dabei können die Lagersegmente vorzugsweise symmetrisch zueinander angeordnet sein. Jedes Lagersegment dient zur Übertragung von sowohl Radial- als auch AxialKräften. Auf diese Weise lassen sich Gleitlager verwirklichen, mit denen hohe Lasten auf kleinstem Bauraum übertragen werden können.

Eine weitere Optimierung der Tragfähigkeit lässt sich dadurch erreichen, dass die Konturtiefe zumindest zweier, der ineinander übergeleiteten Segmente eines Lagersegments voneinander abweicht. Weiterhin ist es denkbar, dass die Querschnittsform der Segmente innerhalb eines Lagersegments voneinander abweicht.

Vielfältige Lager-Gestaltungsmöglichkeiten ergeben sich insbesondere dann, wenn vorgesehen ist, dass eines oder mehrere der Segmente in Umfangsrichtung einen Schmierkeil und einen zum Schmierkeil führenden Übergangsabschnitt und fakultativ eine Rastfläche aufweist.

Im Rahmen der Erfindung kann es vorgesehen sein, dass im Bereich zwischen zwei bis sieben Lagersegmente verwendet sind. Hierdurch lassen sich die gängigsten Lageraufgaben lösen.

Die Tragfähigkeit des hydrodynamischen Gleitlagers und die Pumpfähigkeit in Bezug auf das geförderte Schmiermittel lässt sich dann optimieren, wenn vorgesehen ist, dass der Schmierkeil in Umfangsrichtung und/oder in Achsenrichtung eine lineare oder gekrümmte Lagerfläche, insbesondere eine konkave Geometrie aufweist, und/oder dass die Steigung der den Übergangsabschnitt erzeugenden Kontur in Umfangsrichtung entgegengesetzt zur Steigerung des anschließenden Schmierkeils verläuft.

Die erfindungsgemäßen hydrodynamischen Gleitlager können Rastflächen aufweisen oder dergestalt sein, dass der Schmierkeil unmittelbar in den Übergangsabschnitt übergeht. Bei der Verwendung von Rastflächen hat es sich als vorteilhaft für die Erzielung ausreichender Tragfähigkeiten erwiesen, wenn vorgesehen ist, dass die Erstreckung der Rastflächen in Umfangsrichtung zwischen >0 % und 50 % der Erstreckung eines Segments in Umfangsrichtung beträgt. Insbesondere kann es bei den erfindungsgemäßen hydrodynamischen Gleitlagern vorgesehen sein, dass die Erstreckung des Schmierkeils in Umfangsrichtung im Bereich zwischen 30 % bis 100 % der Gesamtlänge des Segments in dieser Richtung beträgt.

Zur Verbesserung der Schmiermittelführung und zur Verringerung des erforderlichen Schmiermitteldrucks kann es im Rahmen der Erfindung auch vorgesehen sein, dass in zumindest einem Lagersegment eine Schmiermittelnut vorgesehen ist, wobei sich die Schmiermittelnut zumindest über einen Teil eines Konturabschnitts oder zumindest über einen Teil eines Konturabschnitts und zumindest einen Teil des Übergangsabschnittes hinweg erstreckt. Es ist mithin also denkbar, dass sich die Schmiermittelnut nur über den Konturabschnitt hinweg erstreckt, der für die radiale Tragfähigkeit des Lagers zuständig ist. Denkbar ist es auch, dass sich die Schmiermittelnut stetig durch den gesamten Bereich eines Lagersegments hinweg erstreckt, insbesondere also auch den Bereich der Konturabschnitte und den Bereich der den Übergangsabschnitt durchläuft. Schließlich ist es auch denkbar, dass die Schmiermittelnut zu wenigstens einem ihrer Enden hin in der Lagergeometrie ausläuft.

Eine mögliche Erfindungsvariante ist dergestalt, dass das Verhältnis der maximalen Konturtiefe eines Segments im Konturabschnitt zur nominalen Höhe des Lagerspiels im Konturabschnitt im Bereich zwischen 0,5 ≤ (tmax/c) ≤ 5 gewählt ist. Hierdurch wird im Konturabschnitt ein optimaler Kompromiss für die Tragfähigkeit, die rotordynamische Dämpfung und die Vermeidung von Instabilitäten in Form von Halbfrequenzwirbel bzw. Oilwhirls erreicht. Das Lagerspiel ist definiert als die Differenz zwischen Lagerinnen-und Wellenzapfendurchmesser (DIN 31 652-1).

Gemäß einer weiteren Erfindungsvariante kann es vorgesehen sein, dass das Verhältnis der maximalen Konturtiefe eines Segments im Konturabschnitt zur nominalen Höhe des Lagerspiels im Konturabschnitt im Bereich zwischen 0,5 ≤ (tmax/c) ≤ 6 gewählt ist. Damit wird im Konturabschnitt ein optimaler Kompromiss für Tragfähigkeit und Reibleistungsreduzierung erreicht.

Die Erfindung wird im Folgenden anhand von in den Zeichnungen dargestellten Ausführungsbeispielen näher erläutert. Es zeigen:
- Fig. 1: in schematischer Darstellung ein hydrodynamisches Gleitlager mit einem Rotor und einem Stator in Schnittansicht,
- Fig. 2: das hydrodynamische Gleitlager gemäß Fig. 1 in Mehrsegmentausführung,
- Fig. 3 bis 5: einen Stator in Form einer Lagerbuchse für einen Abgasturbolader in verschiedenen Ansichten,
- Fig. 6: den Stator gemäß den Figuren 3 bis 5 in Stirnansicht,
- Fig. 7 und 8: den Stator gemäß Figur 6 in vergrößerter perspektivischer Ansicht,
- Fig. 9: eine schematische Schnittdarstellung durch die Mittellängsachse des Lagerbereichs der Lagerbuchse gemäß den Figuren 3 bis 8 und
- Fig. 10 bis 13: verschiedene Ausführungsvarianten von Abgasturboladern in Seitenansicht und im Schnitt mit hydrodynamischen Gleitlagern eine Teilschnittdarstellung einer Lageranordnung eines Abgasturboladers.

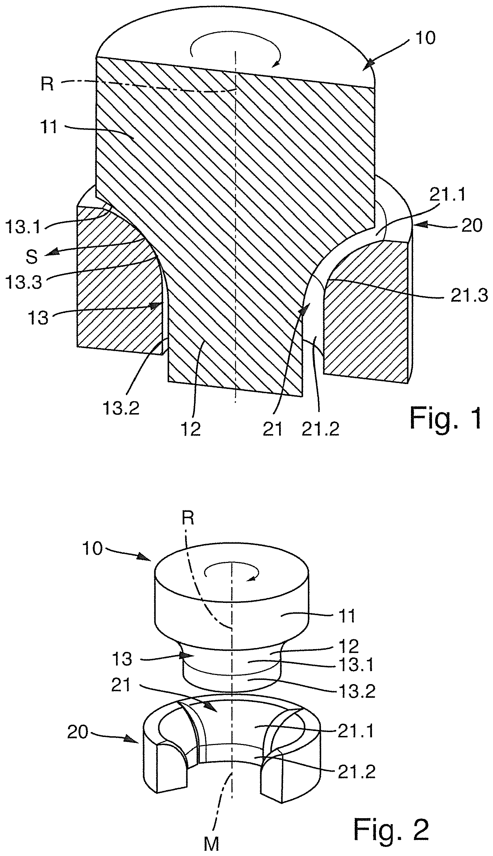

Fig. 1 und Figur 2 zeigen ein hydrodynamisches Gleitlager mit einem Rotor 10 und einem Stator 20. Dabei ist eine Schnittdarstellung längs der Rotorachse R des Rotors 10 gewählt. Der Rotor 10 besitzt ein Anschlussstück 11, an das sich ein Lagerabschnitt 12 anschließt. An dem Anschlussstück 11 kann ein Maschinenbauteil, beispielsweise ein Zahnrad oder dergleichen mittelbar oder unmittelbar angekoppelt werden. Der Lagerabschnitt 12 besitzt eine insbesondere rotationssymmetrische Rotor-Lagerfläche 13. Dabei bildet die Rotor-Lagerfläche 13 in Richtung der Rotationsachse des Gleitlagers eine durchgehende Lagerkontur. Diese Lagerkontur wird von zwei Konturabschnitten 13.1, 13.2 und einem Übergangsabschnitt 13.3 gebildet. Entlang der Rotationsachse (Mittellängsachse) kann mithin im Rahmen der Erfindung der Abstand der Lagerkontur zur Rotationsachse variieren.

Erfindungsgemäß, wie die Ausführungsvariante gemäß Figur 1 zeigt, ist die Lagerkontur in Richtung der Rotationsachse stetig differenzierbar. Bei stetig differenzierbaren Lagerkonturen ist insbesondere eine einfache numerische Lagerberechnung möglich und es werden Tragfähigkeiten über die gesamte Lagerkontur hinweg möglich. Die Gegenfläche 21 kann ebenfalls rotationssymmetrisch sein.

Der Stator 20 ist mit einer Aufnahme für den Rotor 10 gestaltet. Er weist eine Gegenfläche 21 auf. Diese Gegenfläche 21 bildet eine Lagerkontur, die von einer konvexen Wölbung und einem hohlzylindrischen Bereich erzeugt ist. Die konvexe Wölbung und der hohlzylindrische Bereich bilden Konturabschnitte 21.1 21.2 und den Übergangsabschnitt 21.3. Die Gegenfläche 21 bildet ebenfalls eine durchgängige Lagerkontur und ist wie die Rotor-Lagerfläche 13 in Richtung der Rotationsachse stetig differenzierbar.

Der Stator 20 ist im Rahmen der Erfindung derart angeordnet, dass zwischen dem Rotor 10 und dem Stator 20 eine Relativgeschwindigkeit zur hydrodynamischen Druckerzeugung erreicht werden kann. Der Stator 20 kann ortsfest eingebaut, oder ebenfalls drehbar, beispielsweise als Schwimmbuchse ausgebildet sein.

Im zusammengesetzten Zustand des hydrodynamischen Gleitlagers steht die Rotor-Lagerfläche 13 der Gegenfläche 21 gegenüber. Wie Fig. 1 erkennen lässt, kann die Lagerkontur der Rotor-Lagerfläche 13 von der Lagerkontur der Gegenfläche 21 geringfügig abweichen. Dies wird mit unterschiedlichen Wölbungen der Konturabschnitte 13.1 und 21.1 erzeugt. Mit dieser Maßnahme kann beispielsweise verhindert werden, dass die Rotor-Lagerfläche 13 und die Gegenfläche 21 flächig, insbesondere vollflächig aneinander liegen, sodass eine Geometrie vorliegt, welche insbesondere im Anlaufzustand des Gleitlagers, keinen hydrodynamischen Druck erzeugen kann.

Fig. 1 symbolisiert eine Betriebsdarstellung des hydrodynamischen Gleitlagers, bei der sich durch die exzentrische Lage des Rotors 10 zum Stator 20 in der linken Bilddarstellung ein in axialer und radialer Richtung konvergierender Spalt S ergibt. Das zwischen der Rotor-Lagerfläche 13 und der Gegenfläche 21 geführte Schmiermittel erzeugt im Bereich des konvergierenden Spaltes einen Druck, der die Tragfähigkeit des hydrodynamischen Gleitlagers bestimmt. An jeder Stelle wirkt dabei der Druck normal zu der Rotor-Lagerfläche 13 bzw. der Gegenfläche 21. Dadurch ergeben sich sowohl axiale als auch radial zur Rotationsachse R wirkende Kraftkomponenten. Die integrale Summe dieser Kraftkomponenten bestimmt die Tragfähigkeit des Lagers sowohl in Axialrichtung als auch in Radialrichtung.

Gemäß einer weiteren Ausgestaltungsvariante eines erfindungsgemäßen hydrodynamischen Gleitlagers wird die Rotor-Lagerfläche 13 von zwei Konturabschnitten 13.1, 13.2, nämlich von einer konvexen Wölbung und einer Planfläche senkrecht zur Mittellängsachse gebildet. Die Gegenfläche 21 hat eine entsprechende Kontur (Konturabschnitte 21.1, 21.2). Die beiden Konturabschnitte 13.1 und 13.2 werden kontinuierlich über einen Übergangsabschnitt in Richtung der Rotationsachse ineinander übergeleitet

Gemäß einer weiteren Ausgestaltung eines erfindungsgemäßen hydrodynamischen Gleitlagers besitzt der Rotor 10 eine Rotor-Lagerfläche 13 mit 2 Konturabschnitten 13.1, 13.2. Der Konturabschnitt 13.1 wird von einem Stumpfkegel gebildet. Der Konturabschnitt 13.2 ist zylindrisch ausgebildet. Der Übergangsabschnitt 13.3 zwischen den Konturabschnitten 13.1 und 13.2 wird von einer konkave Wölbung gebildet. Dabei ist die Gestaltung derart, dass die Konturabschnitte 13.1 und 13.2 und der Übergangsabschnitt 13.3 kontinuierlich ineinander übergehen. Damit ist die Lagerkontur 13 in Richtung der Rotationsachse R stetig differenzierbar.

Die Gegenfläche 21 des Stators 20 ist entsprechend aus zwei Konturabschnitten 21.1 bis 21.2 zusammengesetzt. Der Konturabschnitt 21.2 ist als kegelförmige Aufnahme ausgebildet. An diesen Konturabschnitt 21.1 schließt sich der Übergangsabschnitt 21.3 als konvexe Wölbung an. Diese konvexe Wölbung geht in den Konturabschnitt 21.2 über, der als Hohlzylinder ausgebildet ist. In zusammengesetztem Zustand stehen sich die Konturabschnitte 13.1 und 21.1; 13.2 und 21.2 bzw. die Übergangsabschnitte 13.3 und 21. gegenüber. Mit den Konturabschnitten 13. 2 und 21. werden aufgrund der zylindrischen Ausbildung alleine Lagerkräfte in Radialrichtung erzeugt. Die Konturabschnitte 13.1 und 21.1 und die Übergangsabschnitte 13.3 bzw. 21.3 erzeugen Kraftkomponenten sowohl in Radialrichtung als auch in Axialrichtung.

Bei einer weiteren Gestaltung eines erfindungsgemäßen hydrodynamischen Gleitlagers kann beispielsweise die Rotor-Lagerfläche 13 aus zwei Konturabschnitten 13.1 13.2 und zwei Übergangsabschnitten 13.3 durchgängig zusammengesetzt sein. Der Konturabschnitt 13.1 kann als Stumpfkegel mit relativ großem Öffnungswinkel ausgeführt werden. Der 1. Übergangsabschnitt 13.3 schließt sich in Form einer konkaven Wölbung an. An den Übergangsabschnitt 13.3 schließt sich unmittelbar der weitere Übergangsabschnitt 13.3 in Form eines Zylinders an. Der weitere Übergangsabschnitt 13.3 geht in den Konturabschnitt 13.2 über, der als konvexe Wölbung ausgeführt ist. Der Stator 20 weist eine Gegenfläche 21 mit zwei Konturabschnitten 21.1 und 21.2 auf. Der Konturabschnitt 21.1 bildet eine kegelförmige Aufnahme, die in eine konvexe Wölbung übergeht, die von dem 1. Übergangsabschnitt 21.3 gebildet ist. An den 1. Übergangsabschnitt 21.3 schließt sich der weitere Übergangsabschnitt 21.3 in Form einer hohlzylindrischen Aufnahme an. Die Gegenfläche 21 schließt mit dem Konturabschnitt 21.2 in Form einer konkaven Wölbung ab. Im zusammengesetzten Zustand und im Betrieb erzeugt das hydrodynamische Gleitlager im Bereich der gegenüberstehenden 2. Übergangsabschnitte 21.3 und 13.3 radiale Kraftkomponenten. Demgegenüber erzeugen die zugeordneten Konturabschnitte 13.1, 13.2, 21.1, 21.2 und die 1. Übergangsabschnitte 13.1,21.3 sowohl radiale als auch axiale Kraftkomponenten.

Wie die vorstehenden Schilderungen verdeutlichen, können zusätzlich zu den Konturabschnitten 21.1, 21.2 bzw. 13.1,13.2 ein, zwei oder mehrere Übergangsabschnitte 21.3,13.3 zwischen den Konturabschnitten 21.1,21.2 bzw. 13.1,13.2 vorgesehen sein

Während des Betriebs eines hydrodynamischen Gleitlagers kann die auf das hydrodynamische Gleitlager einwirkende externe Kraft bezüglich ihres Betrages und ihrer Richtung variieren. Infolge einer solchen Variation verändert sich auch die Zuordnung der Rotationsachse R des Rotors 10 zu der Mittellängsachse M des Stators 20. Dabei kann die Veränderung sowohl ein Winkelversatz zwischen der Rotorachse R und der Mittellängsachse M als auch ein Radialversatz oder ein Axialversatz sein. Insbesondere ist es vorstellbar, dass sämtliche Versatzarten gleichzeitig auftreten. Auf eine solche Veränderung kann das erfindungsgemäße hydrodynamische Gleitlager reagieren. Bei einer derartigen Verstellung des Rotors 10 gegenüber dem Stator 20 verändert sich die Lage und die Geometrie des konvergierenden Spalt S. Eine Veränderung des konvertierenden Spaltes S führt zu einer Veränderung der Kraftkomponenten im konvergierenden Spalt S, die die Tragfähigkeit des hydrodynamischen Gleitlagers bestimmen. Aufgrund dieser Veränderung der Geometrie des hydrodynamischen Spaltes werden variierende Drücke in diesen Bereichen erzielt, die zu einer Vergrößerung der axialen Tragfähigkeit führen. Somit kann die einwirkende Axialkraft kompensiert werden. Gleiche Effekte werden bei sich ändernden Radiallasten bzw. einer Verstellung der Rotationsachse R zu der Mittellängsachse M wirksam.

Im Rahmen der Erfindung ist es weiterhin möglich, die Druckerzeugung im konvergierenden Spalt S zu verändern, wobei im Bereich des hydrodynamischen Spaltes S die Rotor-Lagerfläche 13 und/oder die Gegenfläche 21, Bereiche mit unterschiedlichem thermischem Ausdehnungskoeffizienten und/oder unterschiedlichem Elastizitätsmodul aufweisen können. Hierzu können die Rotor-Lagerfläche 13 und/oder die Gegenfläche 21, Zonen mit unterschiedlichen Materialien aufweisen. Beispielsweise kann im Bereich des konvergierenden Spaltes S eine Ausnehmung, insbesondere eine Bohrung vorgesehen sein, die in den Rotor 10 und/oder in den Stator 20 eingebracht ist. Diese Ausnehmung kann dann mit einem Material ausgefüllt sein, das einen anderen thermischen Ausdehnungskoeffizient und/oder einen anderen Elastizitätsmodul als das umgebende Material des Rotors 10 bzw. Stators 20 aufweist. Beispielsweise kann in die Ausnehmung ein Harzmaterial eingebracht sein, das oberflächenbündig mit der Rotor-Lagerfläche 13 oder der Gegenfläche 21 abschließt. Denkbar ist es auch, dass die Rotor-Lagerfläche 13 und/oder die Gegenfläche 21 Bereiche mit unterschiedlichem thermischem Ausdehnungskoeffizienten aufweisen, wobei insbesondere vorgesehen sein kann, dass in der Rotor-Lagerfläche und/oder der Gegenfläche ein Teilelement, insbesondere bestehend aus Oxidkeramik, oder aus einem anderen Element das einen niedrigeren thermischen Ausdehnungskoeffizienten aufweist, als der an das Teilelement mittelbar oder unmittelbar anschließende Bereich der Rotor-Lagerfläche und/oder der Gegenfläche. Beispiele für ein solches Teilelement sind Zirkoniumwolframat, Silizium, Titan, Stahl/Eisen. Die Rotor-Lagerfläche 13 und/oder die Gegenfläche 21 können beispielsweise zumindest teilweise aus einem Bronzematerial, beispielsweise mit einem thermischen Ausdehnungskoeffizienten von ca. 18e-6 1/K gebildet sein.

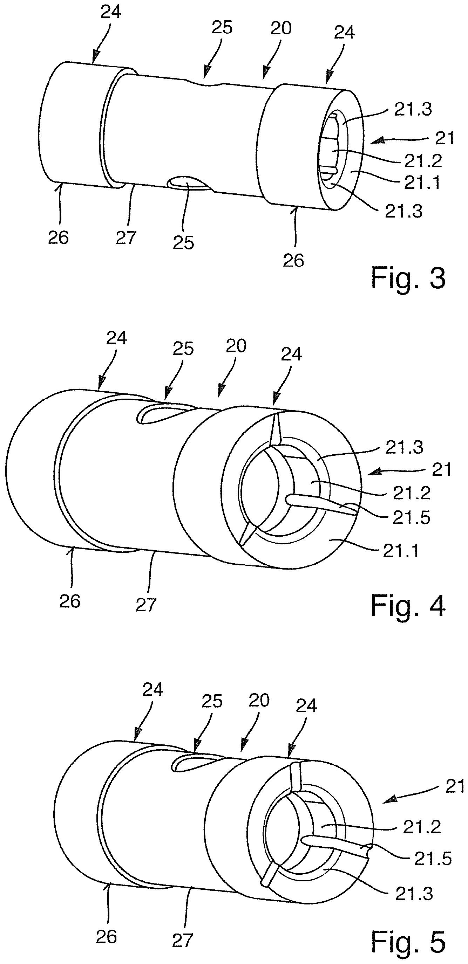

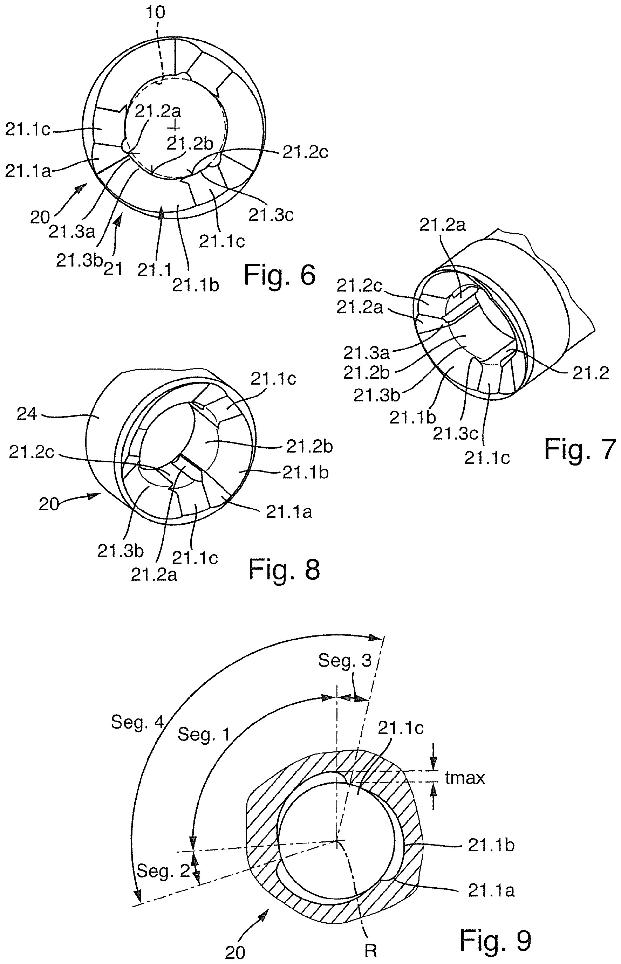

In den Figuren 3 bis 8 sind Statoren 20 in Form von Lagerbuchsen gezeigt, bei denen die vorstehend beschriebenen bzw. die in den Figuren 1 und 2 gezeigten Gegenflächen 21 verwendet sind. Diese Lagerbuchsen weisen ein Mittelstück 27 auf, an das beidseitig Ansätze 24 angeschlossen sind. Das Mittelstück 27 weist Durchbrüche 25 auf, die Zugang zu dem von der Lagerbuchse umschlossenen Innenraum schaffen. Die Ansätze 24 weisen zylindrische Außenflächen 26 auf. Beide Ansätze 24 sind mit Gegenflächen 21 ausgerüstet, wobei die Gegenflächen 21 der beiden Ansätze 24 vorzugsweise identisch gestaltet sind. Im Folgenden wird die Gestaltung der Gegenfläche 21 des rechten Ansatzes 24 der Lagerbuchse näher erläutert. Die Ausführungen gelten prinzipiell auch für den linksseitigen Ansatz 24. Die Gegenfläche 21 weist Konturabschnitte 21.1,21.2 auf. Der Konturabschnitt 21.1 ist im Wesentlichen stumpfkegelförmig ausgebildet. Der Konturabschnitt 21.2 ist im Wesentlichen zylindrisch ausgebildet. Die beiden Konturabschnitte 21.1 und 21.2 sind über einen Übergangsabschnitt 21.3 ineinander übergeleitet. Der Übergangsabschnitt 21.3 wird von einer im Wesentlichen konvexen Wölbung gebildet. Die Figuren 6 bis 9 lassen die Gestaltung der Konturabschnitte 21.1 und 21.2 sowie des Übergangsabschnitts 21.3 näher erkennen. Wie diese Zeichnungen zeigen, sind die Konturabschnitte 21.1 und 21.2 sowie der Übergangsabschnitt 21.3 in Form eines Mehrflächengleitlagers gestaltet. Dementsprechend sind, wie dies Figur 9 erkennen lässt Segmente Seg. 4 verwendet, wobei im vorliegenden Ausführungsbeispiel drei Segmente Seg. 4 Verwendung finden. Die Segmente Seg. 4 sind in Form von Vertiefungen in die Lagerbuchse eingearbeitet. Jedes Segment weist einen Schmierkeil 21.1b, 21.2b bzw. 21.3b auf. Der Schmierkeil 21.1b, 21.2b und 21.3b ist konkav gewölbt. Die Schmierkeile 21.1b, 21.2b bzw. 21.3b haben ihre größte Konturtiefe t Max im Bereich eines Übergangsbereichs 21.1a, 21.2a, 21.3a. Ausgehend von diesem Übergangsbereich 21.1a, 21.2a, 21.3a verringert sich die Konturtiefe, also der Abstand zur Rotationsachse R des Gleitlagers kontinuierlich. Dies lässt insbesondere Figur 9 erkennen. Diese Zeichnung zeigt einen Schnitt senkrecht zur Rotationsachse R und durch den Konturabschnitt 21.2, der den im Wesentlichen zylindrischen Lagerteil des Ansatzes 24 bildet. Wie diese Zeichnung weiter zeigt, geht der Schmierkeil 21.1b, 21.2b, 21 3b an seiner, dem Übergangsbereich 21.1a, 21.2a, 21.3a abgewandten Seite in eine Rastfläche 21.1c, 21.2c, 21.3c über. In Figur 9 ist der Übergangsbereich 21.1a, 21.a, 21.3a mit Seg. 3 und die Rastfläche 21.1c, 21.2c, 21.3c mit Seg. 2 gekennzeichnet. Die Erstreckung der Schmierkeile 21.1b, 21.2b, 21.3b sind mit Seg.1 gekennzeichnet. Wie insbesondere die Figuren 6 bis 8 erkennen lassen, bilden jeweils ein Schmierkeil 21.1b, 21.2b des 1. und 2. Konturabschnittes 21.1,21.2 und ein Schmierkeil 21.3b des Übergangsabschnittes 21.3 ein Lagersegment. Bei dem gezeigten Lager sind drei Lagersegmente verwendet. Selbstverständlich kann auch eine andere Anzahl von Lagersegmenten verwendet werden. Besonders bevorzugt werden im Rahmen der Erfindung 2 bis 8 Lagersegmente verwendet. Im Bereich eines Lagersegments gehen die Schmierkeile 21.1b, 21.2b und 21.3b kontinuierlich ineinander über. Dabei bildet sich bei einem Schnitt längs und durch die Rotationsachse R in Schnittansicht eine durchgehende und stetig differenzierbare Lagerkontur. Wie die Zeichnungen weiter zeigen, können auch die Übergangsbereiche 21.1a, 21.2a, 21.3a und die Rastflächen 21.1c, 21.2c und 21.3c ineinander übergehen.

Die Konturtiefe der Schmierkeile 21.1b, 21.2b und 21.3b bzw. die Konturtiefe der Rastflächen 21.1c, 21.2c und 21.3c innerhalb eines Lagersegments muss nicht zwangsläufig gleich sein. Vielmehr ist es denkbar, dass die Konturtiefe t in Richtung der Rotationsachse R variiert.

Die Zusammensetzung der Segmente Seg.4 innerhalb eines Lagersegments muss ebenfalls nicht identisch sein. Vielmehr kann sich die Zusammensetzung ändern. Beispielsweise kann es vorgesehen sein, dass nur der Konturabschnitt 21.1 eine Segmentierung und Rastfläche aufweist, wohingegen beispielsweise der Abschnitt 21.2 keine Rastfläche oder Segmentierung aufweist und somit zylindrischer Form ist.

Der Konturverlauf in den Segmenten Seg.1 und Seg.3 muss nicht zwangsläufig konkav sein, wie dies in den Zeichnungen dargestellt ist. Vielmehr kann es auch vorgesehen sein, dass ein variierender Konturverlauf vorgesehen ist. Beispielsweise können auch lineare, degressive oder progressiv verlaufende Konturen oder Konturabschnitte an den Segmenten Seg.1 und Seg.3 vorgesehen sein.

In den Figuren 3 bis 5 sind im Bereich der Konturabschnitte 21.1, 21.2 bzw. im Bereich des Übergangsbereichs 21.3 Schmiermittelnuten 21.5 vorgesehen. Dabei können die Schmiermittelnuten 21.5 nur im Bereich des Konturabschnitt 21.2, also im Radialteil der Lagerkontur vorgesehen sein (Figur 3). Denkbar ist es auch, dass die Schmiermittelnuten 21.5 stetig durchlaufen und sich durch die Konturabschnitte 21.1, 21.2 und den Übergangsbereich 21.3 erstrecken, wie dies Figur 5 zeigt. Weiterhin ist es denkbar, dass sich die Schmiermittelnuten 21.5 durch die beiden Konturabschnitte 21.1, 21.2 und den Übergangsbereich 21.3 hindurch erstrecken und zu den Enden der Schmiermittelnut 21.5 hin auslaufen.

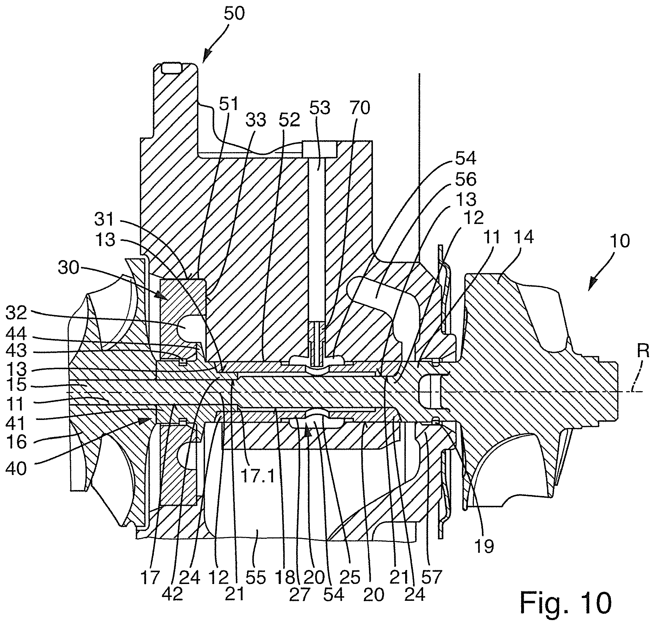

In den Fig. 10 bis 13 sind verschiedene Ausführungsvarianten von erfindungsgemäßen Abgasturboladern gezeigt, bei denen die vorbeschriebenen erfindungsgemäßen hydrodynamischen Gleitlager zum Einsatz kommen.

Wie Fig. 10 zeigt, weist der Abgasturbolader einen Rotor 10 auf. Der Rotor 10 besitzt eine Welle 15, die an ihren Wellenenden Anschlussstücke 11 aufweist. Das eine Anschlussstück 11 trägt ein Turbinenrad 14. Das andere Anschlussstück 11 ein Verdichterrad 16.

Der Rotor 10 weist zwei Lagerabschnitte 12 auf, die in Achsrichtung der Welle 15 zueinander beabstandet angeordnet sind. Dabei werden im Bereich der Lagerabschnitte 12 Rotor-Lagerflächen 13 gebildet. Im Rahmen der Erfindung können die Rotor-Lagerflächen 13 entweder einteilig mit der Welle 15 ausgebildet sein. Denkbar ist es jedoch auch, dass die Rotor-Lagerfläche 13 von einem, insbesondere drehfest mit der Welle 15 verbundenen, Lagerstück gebildet ist. So ist beispielsweise bei dem in Fig. 10 dargestellten Abgasturbolader die Rotor-Lagerfläche 13, welche dem Turbinenrad 14 zugeordnet ist einteilig an der Welle 15 ausgebildet. Der linksseitige Lagerabschnitt 12 wird von einem Rotorteil 40 gebildet, der drehfest mit der Welle 15 verbunden ist. Das Rotorteil 40 weist ein Basisteil 41 auf, das von einer Aufnahme durchdrungen ist. Mit dieser Aufnahme kann das Rotorteil 40 auf eine Sitzfläche 17 der Welle 15 aufgeschoben werden. Die Aufschiebbewegung lässt sich dabei beispielsweise durch einen Absatz 17.1 der Welle 15 begrenzen, an der das Rotorteil 40 axial anschlägt. Vorzugsweise ist das Rotorteil 40 mittels eines Passsitzes auf der Welle 15 axial gesichert. Das Rotorteil 40 weist einen Lagerabschnitt 42 auf, der einteilig an das Basisteil 41 angeformt ist. Der Lagerabschnitt 42 bildet die Rotor-Lagerfläche 13 des linksseitigen Lagerabschnitts 12.

Im Rahmen der Erfindung kann es vorgesehen sein, dass eine Rotor-Lagerfläche 13 nicht alleine nur von der Welle 15 oder dem Rotorteil 40 gebildet ist. Vielmehr kann auch eine Rotor-Lagerfläche 13 vorgesehen sein, die sich sowohl über einen Teil der Welle 15 als auch einen Teil des Rotorteils 40 hinweg erstreckt.

Das Rotorteil 40 kann weiterhin eine umlaufende Dichtungsaufnahme 43, beispielsweise in Form einer umlaufenden Nut und einen Abweiser 44 aufweisen.

Der Rotor 10 ist in einem Gehäuse 50, vorzugsweise dem Aufnahmegehäuse des Abgasturboladers gehalten. Das Gehäuse 50 ist von einer Lageraufnahme 52 durchdrungen. In diese Lageraufnahme 52 ist ein Stator 20 eingesetzt. Dabei kann der Stator 20, wie Fig. 10 zeigt als buchsenförmiger Einsatz ausgebildet sein wobei insbesondere eine der in den Figuren 3 bis 9 gezeigten Lagerbuchsen zum Einsatz kommt. Der Stator 20 weist an seinen längsseitigen Enden die Ansätze 24 auf. Die radialen Außenflächen 26 der Ansätze 24 können im Wesentlichen zylindrisch ausgebildet sein. Die Ansätze 24 bilden Konturabschnitte 21.1, 21.2 und Übergangsabschnitte 21.3 die Konturabschnitten 13.1 13.2 bzw. Übergangsabschnitten 13.3 der Rotor-Lagerflächen 13 gegenüberstehen. Dementsprechend können erfindungsgemäß die Rotor-Lagerfläche 13 und die Gegenfläche 21 des Stators 20, wie oben erwähnt als durchgehende Lagerkonturen ausgebildet sein, um über die gesamte Lagerkontur hinweg axiale- und/oder radiale Tragfähigkeiten zu verwirklichen.

Die beiden Ansätze 24 sind über das Mittelstück 27 einteilig miteinander verbunden.

Für die Montage wird der Rotor 10 mit montiertem Turbinenrad 14 in der Bildebene gemäß Fig. 10 von rechts nach links in das Gehäuse 50 eingeschoben. Der Stator 20 ist dabei ortsfest im Gehäuse 50 vormontiert. Denkbar ist jedoch auch, dass der Stator axial unverschiebbar, jedoch drehbar im Gehäuse 50 gelagert ist. Die Welle 15 wird durch den Stator 20 hindurchgeschoben, bis die Rotor-Lagefläche 13 des rechtsseitigen Lagerabschnitts 12 der Gegenfläche 21 des Stators 20 gegenübersteht. Beim Einschieben des Rotors 10 gelangt dann auch eine in eine umlaufende Dichtungsaufnahme 19 eingelegte Dichtung in den Bereich einer Dichtfläche des Gehäuses 50. Anschließend kann von der linken Seite her das Rotorteil 40 auf die Welle 15 aufgeschoben werden, bis es an dem Absatz 17.1 anschlägt. Dann steht die Rotor-Lagerfläche 13 des Rotorteils 40 der linksseitigen Gegenfläche 21 des Stators 20 gegenüber. In die umlaufende Dichtungsaufnahme 43 des Rotorteils 40 kann eine Dichtung eingelegt werden. Dann wird ein Lagerstück 30 über das Rotorteil 40 geschoben. Das Lagerstück 30 kann in Form eines Deckels ausgebildet sein. Es ist mit einer Umfangsfläche 31 abgedichtet in eine Ausnehmung 51 des Gehäuses 50 eingesetzt. Die passgenaue Montage des Lagerstücks 30 wird mit einem Anschlag 33 des Lagerstücks 30 gewährleistet, der an einer Gegenfläche des Gehäuses 50 im Montagezustand anliegt. Das Lagerstück 30 weist einen Ableitbereich 32 auf, der in Form eines Schleuderkanals umlaufend in die Innenkontur des Lagerstücks 30 eingebracht sein kann. Abschließend wird das Verdichterrad 16 auf die Welle 15 aufgeschoben und daran befestigt. Dabei schlägt das Verdichterrad 16 an dem Rotorteil 40 an und ist sowohl axial als auch radial unverschiebbar gegenüber der Welle 15 fixiert.

In einem alternativen Montageverfahren, kann der Stator 20 auf der Welle 15 vormontiert werden und im Paket in das Lagergehäuse geschoben werden, wo der Stator 20 anschließend in axialer Richtung bezüglich des Gehäuses 50 fixiert wird.

In einer alternativen Ausbildung, kann das Lagerstück 30 wegfallen. Bei dieser nicht gezeigten Ausführung weist das Rotorteil 40 aus Montagegründen keine Abweiser 44 auf. Das Rotorteil 40 kann aber weiterhin eine umlaufende Dichtungsaufnahme 43, beispielsweise in Form einer umlaufenden Nut zur Aufnahme eines Dichtungsrings aufweisen. Der Dichtungsring liegt dann am Gehäuse 50 statt am Lagerstück 30 an.

Wie Fig. 10 weiter erkennen lässt, ist in das Gehäuse 50 ein Schmiermittelkanal 53 eingebracht. Der Schmiermittelkanal 53 mündet in einem Verteilerraum 54, der umlaufend um das Mittelstück 27 des Stators 20 herum im Gehäuse 50 ausgeformt ist. Der Stator 20 besitzt Durchbrüche 25. Diese schaffen eine räumliche Verbindung zwischen dem Verteilerraum 54 und einem zwischen Rotor 10 und Stator 20 angeordneten Hohlraum 18. Der Hohlraum 18 führt von den Durchbrüchen 25 in axialer Richtung der Welle 15 hin zu den beiden Lagerabschnitten 12. Der Hohlraum 18 steht in räumlicher Verbindung mit dem Spaltbereich, der zwischen den Rotor-Lagerflächen 13 und den Gegenflächen 21 der Lagerabschnitte 12 gebildet ist. Dementsprechend kann ein Betriebsmittel, insbesondere ein Schmiermittel über den Schmiermittelkanal 53 zu den beiden hydrodynamischen Gleitlagern zugefördert werden. Dabei können insbesondere die oben beschriebenen Schmiermittelnuten 21.5 unterstützend bei der Ölförderung wirken Wenn nun während des Betriebseinsatzes der Rotor 10 relativ zum Stator 20 gedreht wird, entsteht ein hydrodynamischer Druckaufbau im Spaltbereich der beiden Lagerabschnitte 12. Dabei wird kontinuierlich Schmiermittel über den Schmiermittelkanal 53 und den Hohlraum 18 zu den Lagerabschnitten 12 gefördert. Das Schmiermittel durchsetzt dabei die beiden hydrodynamischen Gleitlager. Im Anschluss an den Spaltbereich des linken hydrodynamischen Gleitlagers gelangt das Schmiermittel dann in den Bereich des Rotorteils 40 und wird über den Abweiser 44 radial nach außen abgeschleudert. Dabei gelangt dann das Schmiermittel in den Ableitbereich 32 des Lagerstücks 30. Dann läuft das Schmiermittel in Schwerkraftrichtung ab und wird in einem Hohlraum 55 des Gehäuses gesammelt.

Bei dem rechtsseitigen hydrodynamischen Gleitlager wird das Schmiermittel im Anschluss an den Spaltbereich des Gleitlagers von dem Anschlussstück 11 radial nach außen abgeschleudert. Das Schmiermittel gelangt dabei in den Bereich eines Ableitbereichs 56, der in dem Gehäuse 50 ausgeformt ist. Das Schmiermittel läuft dann in Schwerkraftrichtung nach unten ab und wird ebenfalls in dem Hohlraum 55 gesammelt. Sowohl mit dem Ableitbereich 32 des Lagerstücks 30 als auch insbesondere mit dem Ableitbereich 56 im Bereich des Turbinenrads 14 wird eine Gehäusekühlung mit dem Schmiermittel erreicht. Dies stellt einen erheblichen Zusatznutzen dar. Insbesondere kann dann über das Schmiermittel ein während des Betriebseinsatzes auftretender Wärmeeintrag abgeleitet und von den Lagerstellen 12 ferngehalten werden. Hierdurch kann bei Hochtemperaturanwendungen die Betriebssicherheit der hydrodynamischen Gleitlager garantiert werden. Insbesondere wird verhindert, dass das Schmiermittel dann im Bereich der Lagerabschnitte 12 einer unzulässigen Temperaturbelastung ausgesetzt wird.

Der Stator 20 wird bei der Ausführungsform in Fig. 10 durch einen, in den Durchbruch 25 des Mittelstücks 27 eingreifenden, Pin 70 axial und drehfixiert. Der Pin kann vorteilhafter Weise im Gehäuse 50 in der Ölversorgungsbohrung (Schmiermittelversorgung 35) positioniert werden und greift in den Durchbruch 25 des Stators 20 hinein.

Das Schmiermittel wird im Hohlraum 55 gesammelt und gegebenenfalls über einen Wärmetauscher und einer Pumpe wieder zurück in den Schmiermittelkanal 53 gefördert.

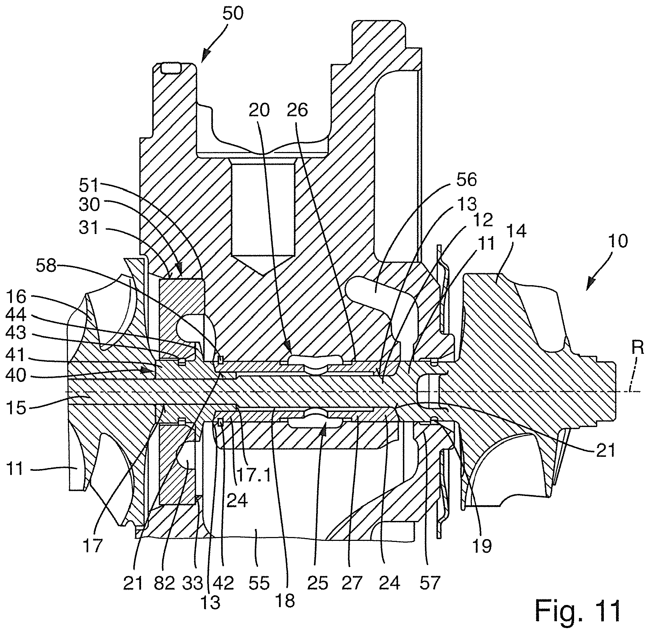

Der Stator 20 gemäß Fig. 11 ist in dem Gehäuse 50 mit einem Fixierelement 58 gehalten. Das Fixierelement 58 kann dabei beispielsweise von einem Sicherungsring gebildet sein, wie Fig. 11 erkennen lässt.

Im Übrigen entspricht die technische Ausgestaltung des Abgasturboladers gemäß Fig. 11 der gemäß Fig. 10, so dass auf die vorstehenden Ausführungen Bezug genommen werden kann.

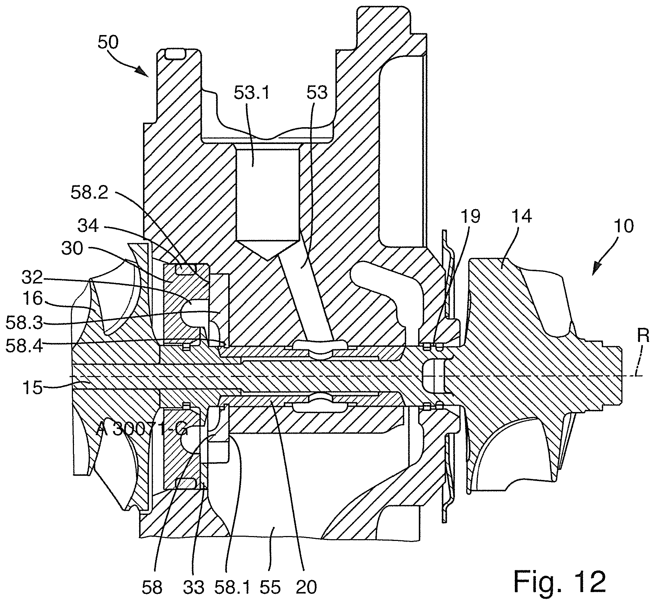

Fig. 12 zeigt eine weitere Ausgestaltungsvariante eines Abgasturboladers, die im Wesentlichen der Gestaltung gemäß Fig. 10 bzw. Fig. 11 entspricht, so dass auf die vorstehenden Ausführungen Bezug genommen werden kann und nur auf die Unterschiede eingegangen wird.

Wie Fig. 12 erkennen lässt, ist für eine verbesserte Dichtwirkung im Bereich des Stützabschnitts 57 des Gehäuses 50 eine Doppeldichtung mit zwei Dichtaufnahmen 19 verwendet.

Der Schmiermittelkanal 53 geht von einer Zuleitung 53.1 des Gehäuses 50 aus. Diese kann in Form einer Anschlussverschraubung ausgeführt sein.

Der Stator 20 ist mittels eines Fixierelements 58 sowohl in Umfangsrichtung als auch in Achsrichtung gehalten. Das Fixierelement 58 weist einen Basiskörper 58.3 auf, der eine Sitzfläche 58.1 und eine Stützfläche 58.2 aufweist. An den Basiskörper 58.3 ist ein Fixieransatz 58.4 angeschlossen. Der Fixieransatz 58.4 greift in eine Fixieraufnahme des Stators 20 ein um diesen zu sichern. Hierzu kann das Fixierelement 58 zweiteilig ausgebildet sein um die Fixieransätze 58.4 in die umlaufende Nut des Stators 20 einsetzen zu können. Denkbar ist es jedoch auch, dass der Fixieransatz 58.4 als elastisch auslenkbares Rastelement an dem einteiligen Fixierelement 58 angebracht ist. Das Fixierelement 58 ist derart ausgebildet, dass sowohl axiale Kräfte als auch Kräfte in Umfangsrichtung aufgenommen werden können, um den Stator 20 in axialer Richtung und in Umfangsrichtung zu fixieren.

Wie Fig. 12 erkennen lässt, bildet das Fixierelement 58 im Anschluss an den Spaltbereich des hydrodynamischen Gleitlagers eine Ausförderkontur. Diese gewährleistet, dass das Schmiermittel über das Fixierelement 58 in den Ableitbereich 32 des Lagerstücks 30 gelangt.

Schließlich gibt Fig. 12 zu erkennen, dass das Lagerstück 30 an seinem Außenumfang eine Dichtung 34 trägt. Damit lässt sich das Lagerstück 30 zuverlässig gegenüber dem Gehäuse 50 abdichten. Das Fixierelement 58 ist in eine Aufnahme des Gehäuses 50 derart eingesetzt, dass es mit seiner Sitzfläche 58.1 an einer Gegenfläche des Gehäuses 50 anschlägt. Die Stützfläche 58.2 dient als Abstützung für den Anschlag 33 des Lagerstücks 30.

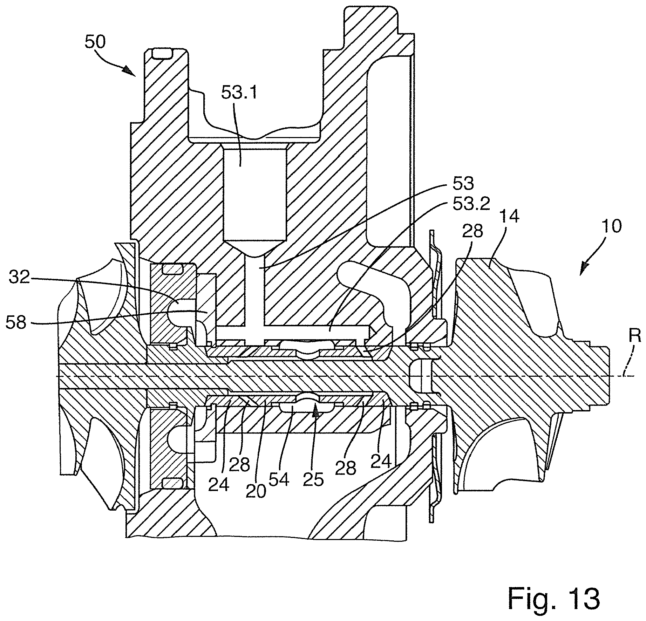

Fig. 13 zeigt eine weitere Ausführungsvariante eines Abgasturboladers, wobei die Gestaltung dieses Abgasturboladers der des Abgasturboladers gemäß Fig. 12 im Wesentlichen entspricht, so dass auf die vorstehenden Ausführungen Bezug genommen werden kann.

Im Unterschied zu dem Abgasturbolader gemäß Fig. 12 weist der Abgasturbolader gemäß Fig. 13 eine modifizierte Schmiermittelversorgung auf. Dementsprechend ist eine Zuleitung 53.1 vorgesehen, die in den Schmiermittelkanal 53 mündet. Der Schmiermittelkanal 53 geht in zwei Versorgungsleitungen 53.2 über. Die Versorgungsleitungen 53.2 münden in Zuführungen 28 des Stators 20. Die Zuführungen 28 stehen in räumlicher Verbindung mit dem Spaltbereich der beiden hydrodynamischen Gleitlager zum Zwecke der Schmiermittelversorgung.

Wie vorstehend bereits erwähnt wurde, kann der der Stator 20 auf unterschiedliche Weisen im Gehäuse 50 axial und drehfest verbunden sein.

## Patentansprüche

1. Hydrodynamisches Gleitlager mit einem Stator (20) und einem relativ zum Stator (20) verdrehbarem Rotor (10), wobei eine Rotor-Lagerfläche (13) einer Gegenfläche (21) des Stators (20) zur hydrodynamischen Druckerzeugung gegenübersteht,
wobei die Rotor-Lagerfläche (13) und/oder die Gegenfläche (21) bei einem Schnitt längs und durch die Rotationsachse (R) in Schnittansicht eine durchgehende Lagerkontur bildet, die aus wenigstens zwei Konturabschnitten (13.1, 13.2; 21.1, 21.2) gebildet ist,
wobei die Konturabschnitte (13.1, 13.2; 21.1, 21.2) geeignet sind hydrodynamische Tragfähigkeit in radialer und axialer Richtung zu erzeugen, wobei die Konturabschnitte (13.1, 13.2; 21.1, 21.3) mittels wenigstens eines Übergangsabschnitts (13.3; 21.3) derart ineinander übergeleitet sind, dass hydrodynamische Tragfähigkeit über die Konturabschnitte (13.1, 13.2; 21.1, 21.2) und den Übergangsabschnitt (13.3; 21.3) erzeugbar ist,
**dadurch gekennzeichnet,**
**dass** das Gleitlager als Mehrflächengleitlager mit zwei oder mehreren Schmierkeilen (21.1b, 21.2b, 21.3b) im Bereich der Konturabschnitte (13.1, 13.2; 21.1, 21.2) und des Übergangsabschnittes (13.3; 21.3) ausgebildet ist, und dass zumindest ein Teil der Schmierkeile (21.1b, 21.2b, 21.3b) der Konturabschnitte (21.1; 21.2) und des Übergangsabschnittes (13.3, 21.3) derart ineinander übergeleitet sind, dass sich in Lagerachsrichtung ein stetig differenzierbarer Konturverlauf ergibt.

2. Hydrodynamisches Gleitlager nach Anspruch 1,
**dadurch gekennzeichnet,**
**dass** die in Lagerachsrichtung ineinander übergeleiteten Konturabschnitte (13.1, 13.2; 21.1, 21.3) und der wenigstens eine Übergangsabschnitt (13.3, 21.3) jeweils Segmente (Seg.4) bilden,
und **dass** die Segmente (Seg.4) dieser Konturabschnitte (13.1, 13.2; 21.1, 21.3) und des wenigstens einen Übergangsabschnitts (13.3, 21.3) ein Lagersegment bilden.

3. Hydrodynamisches Gleitlager nach Anspruch 2,
**dadurch gekennzeichnet,**
**dass** die Konturtiefe (t) zumindest zweier, der ineinander übergeleiteten Segmente (Seg.4) eines Lagersegments voneinander abweicht.

4. Hydrodynamisches Gleitlager nach einem der Ansprüche 2 oder 3,
**dadurch gekennzeichnet,**
**dass** eines oder mehrere der Segmente (Seg.4) in Umfangsrichtung einen Schmierkeil (21.1 b; 21.2b; 21.3b) und einen zum Schmierkeil (21.1 b; 21.2b; 21.3b) führenden Übergangsabschnitt (21.1a; 21.2a; 21.3a) und fakultativ eine Rastfläche (21.1c; 21.2c; 21.3c) aufweist.

5. Hydrodynamisches Gleitlager, nach einem der Ansprüche 2 bis 4
**dadurch gekennzeichnet,**
**dass** die Querschnittsform der Segmente (Seg.4) innerhalb eines Lagersegments voneinander abweicht.

6. Hydrodynamisches Gleitlager nach einem der Ansprüche 2 bis 5
**dadurch gekennzeichnet,**
**dass** im Bereich zwischen zwei bis sieben Lagersegmente verwendet sind.

7. Hydrodynamisches Gleitlager nach einem der Ansprüche 1 bis 6,
**dadurch gekennzeichnet**,
der Schmierkeil (21.1b, 21.2b, 21.3b) in Umfangsrichtung und/oder in Achsenrichtung eine lineare oder gekrümmte Lagerfläche, insbesondere eine konkave Geometrie aufweist.

8. Hydrodynamisches Gleitlager nach einem der Ansprüche 4 bis 7,
**dadurch gekennzeichnet,**
**dass** die Steigung der den Übergangsabschnitt (21.1a; 21.2a; 21.3a) erzeugenden Kontur in Umfangsrichtung entgegengesetzt zur Steigerung des anschließenden Schmierkeils (21.1b, 21.2b, 21.3b) verläuft.

9. Hydrodynamisches Gleitlager nach einem der Ansprüche 1 bis 8,
**dadurch gekennzeichnet,**
**dass** das Verhältnis der maximalen Konturtiefe (t-Max) eines Segments im Konturabschnitt (21.2) (Seg.4) zur nominalen Höhe des Lagerspiels (C) im Konturabschnitt 21.2 im Bereich zwischen 0,5 ≤ t-max/c ≤ 5 gewählt ist.

10. Hydrodynamisches Gleitlager nach einem der Ansprüche 1 bis 9,
**dadurch gekennzeichnet,**
**dass** das Verhältnis der maximalen Konturtiefe (t-Max) eines Segments im Konturabschnitt (21.1) (Seg.4) zur nominalen Höhe des Lagerspiels (C) im Konturabschnitt (21.2) im Bereich zwischen 0,5 ≤ t-max/c ≤ 6 gewählt ist.

11. Hydrodynamisches Gleitlager nach einem der Ansprüche 1 bis 10,
**dadurch gekennzeichnet,**
**dass** die Erstreckung der Rastflächen (21.1c; 21.2c; 21.3c) in Umfangsrichtung zwischen 0 % und 50 % der Erstreckung eines Segments (Seg.4) in Umfangsrichtung beträgt.

12. Hydrodynamisches Gleitlager nach einem der Ansprüche 1 bis 11,
**dadurch gekennzeichnet,**
**dass** die Erstreckung des Schmierkeils (21.1 b; 21.2b; 21.3b) in Umfangsrichtung im Bereich zwischen 30 % bis 100 % der Gesamtlänge des Segments (Seg.4) in dieser Richtung beträgt.

13. Hydrodynamisches Gleitlager nach einem der Ansprüche 1 bis 12,
**dadurch gekennzeichnet,**
**dass** in zumindest einem Lagersegment eine Schmiermittelnut (21.2a) vorgesehen ist, wobei sich die Schmiermittelnut (21.2a) zumindest über einen Teil eines Konturabschnitts (13.1, 13.2; 21.1, 21.2) oder zumindest über einen Teil eines Konturabschnitts (13.1, 13.2; 21.1, 21.2) und zumindest einen Teil des Übergangsabschnittes (13.3; 21.3) hinweg erstreckt.

14. Abgasturbolader mit einem hydrodynamischen Gleitlager nach einem der Ansprüche 1 bis 13.

## Claims

1. Hydrodynamic plain bearing with a stator (20) and a rotor (10) rotatable relative to the stator (20), wherein a rotor bearing surface (13) faces a counter surface (21) of the stator (20) for hydrodynamic pressure generation,
wherein the rotor bearing surface (13) and/or the counter surface (21), when cut longitudinally and through the axis of rotation (R) in sectional view, form a continuous bearing contour which is formed from at least two contour sections (13.1, 13.2; 21.1, 21.2),
wherein the contour sections (13.1, 13.2; 21.1, 21.2) are suitable for generating hydrodynamic load-bearing capacity in radial and axial direction, wherein the contour sections (13.1, 13.2; 21.1, 21. 3) are transferred into one another by means of at least one transition section (13.3; 21.3) in such a way that hydrodynamic load-bearing capacity can be generated via the contour sections (13.1, 13.2; 21.1, 21.2) and the transition section (13.3; 21.3),
**characterized in**
**in that** the sliding bearing is designed as a multi-surface sliding bearing having two or more lubricating wedges (21.1b, 21.2b, 21.3b) in the region of the contour sections (13.1, 13.2; 21.1, 21.2) and the transition section (13.3; 21.3)
and **in that** at least some of the lubricating wedges (21.1b, 21.2b, 21.3b) of the contour sections (21.1; 21.2) and of the transition section (13.3, 21.3) are transferred into one another in such a way that a continuously differentiable contour profile results in the axial direction of the bearing.

2. Hydrodynamic plain bearing according to claim 1,
**characterized in that**
the contour sections (13.1, 13.2; 21.1, 21.3) which merge into one another in the bearing axial direction and the at least one transition section (13.3, 21.3) each form segments (Seg.4),
and **in that** the segments (Seg.4) of these contour sections (13.1, 13.2; 21.1, 21.3) and of the at least one transition section (13.3, 21.3) form a bearing segment.

3. Hydrodynamic plain bearing according to claim 2,
**characterized in**
**that** the contour depth (t) of at least two of the segments (segments.4) of a bearing segment which merge into one another deviates from one another.

4. Hydrodynamic plain bearing according to one of claims 2 or 3,
**characterized in that**
one or more of the segments (Seg.4) has, in the circumferential direction, a lubricating wedge (21.1b; 21.2b; 21.3b) and a transition section (21.1a; 21.2a; 21.3a) leading to the lubricating wedge (21.1b; 21.2b; 21.3b) and, optionally, a detent surface (21.1c; 21.2c; 21.3c).

5. Hydrodynamic plain bearing, according to any one of claims 2 to 4
**characterized in**
**that** the cross-sectional shape of the segments (Seg.4) within a bearing segment deviates from each other.

6. Hydrodynamic plain bearing according to one of claims 2 to 5
**characterized in**
**that** in the range between two to seven bearing segments are used.

7. Hydrodynamic plain bearing according to one of claims 1 to 6,
**characterized in that**
the lubricating wedge (21.1b, 21.2b, 21.3b) has a linear or curved bearing surface, in particular a concave geometry, in the circumferential direction and/or in the axial direction.

8. Hydrodynamic plain bearing according to any one of claims 4 to 7,
**characterized in**
**that** the rise of the contour producing the transition section (21.1a; 21.2a; 21.3a) runs in the circumferential direction opposite to the rise of the adjoining lubricating wedge (21.1b, 21.2b, 21.3b).

9. Hydrodynamic plain bearing according to any one of claims 1 to 8,
**characterized in**
**that** the ratio of the maximum contour depth (t-Max) of a segment in the contour section (21.2) (Seg.4) to the nominal height of the bearing clearance (C) in the contour section 21.2 is selected in the range between 0.5 ≤ t-max/c ≤ 5.

10. Hydrodynamic plain bearing according to any one of claims 1 to 9,
**characterized in**
**that** the ratio of the maximum contour depth (t-Max) of a segment in the contour section (21.1) (Seg.4) to the nominal height of the bearing clearance (C) in the contour section (21.2) is selected in the range between 0.5 ≤ t-max/c ≤ 6.

11. Hydrodynamic plain bearing according to any one of claims 1 to 10,
**characterized in**
**that** the extension of the detent surfaces (21.1c; 21.2c; 21.3c) in the circumferential direction is between 0 % and 50 % of the extension of a segment (Seg.4) in the circumferential direction.

12. Hydrodynamic plain bearing according to any one of claims 1 to 11,
**characterized in**
**that** the extension of the lubricating wedge (21.1b; 21.2b; 21.3b) in the circumferential direction is in the range between 30 % and 100 % of the total length of the segment (Seg.4) in this direction.

13. Hydrodynamic plain bearing according to any one of claims 1 to 12,
**characterized in**
**in that** a lubricant groove (21.2a) is provided in at least one bearing segment, the lubricant groove (21.2a) extending at least over part of a contour section (13.1, 13.2; 21.1, 21.2) or at least over part of a contour section (13.1, 13.2; 21.1, 21.2) and at least part of the transition section (13.3; 21.3).

14. Exhaust gas turbocharger with a hydrodynamic plain bearing according to any one of claims 1 to 13.

## Revendications

1. Palier lisse hydrodynamique avec un stator (20) et un rotor (10) pouvant tourner par rapport au stator (20), une surface d'appui de rotor (13) étant opposée à une contre-surface (21) du stator (20) pour la génération de pression hydrodynamique,
la surface d'appui (13) du rotor et/ou la contre-surface (21) formant, en cas de coupe le long et à travers l'axe de rotation (R), en vue en coupe, un contour de palier continu qui est formé d'au moins deux sections de contour (13.1, 13.2 ; 21.1, 21.2), les sections de contour (13.1, 13.2 ; 21.1, 21.2) étant aptes à générer une capacité de charge hydrodynamique dans les directions radiale et axiale, les sections de contour (13.1, 13.2 ; 21.1, 21.2) étant reliées entre elles par une ligne de contact. 3) sont transférées l'une dans l'autre au moyen d'au moins une section de transition (13.3 ; 21.3) de telle sorte qu'une capacité de charge hydrodynamique peut être générée par l'intermédiaire des sections de contour (13.1, 13.2 ; 21.1, 21.2) et de la section de transition (13.3 ; 21.3),
**caractérisé en ce que**
**en ce que** le palier lisse est conçu comme un palier lisse à surfaces multiples avec deux ou plusieurs coins de lubrification (21.1b, 21.2b, 21.3b) dans la zone des sections de contour (13.1, 13.2 ; 21.1, 21.2) et de la section de transition (13.3 ; 21.3),
et **en ce qu'**au moins une partie des coins de lubrification (21.1b, 21.2b, 21.3b) des sections de contour (21.1; 21.2) et de la section de transition (13.3, 21.3) sont transférés les uns dans les autres de telle sorte qu'il en résulte, dans la direction de l'axe du palier, un tracé de contour pouvant être différencié de manière continue.

2. Palier lisse hydrodynamique selon la revendication 1,
**caractérisé en ce que**,
**en ce que** les sections de contour (13.1, 13.2 ; 21.1, 21.3) transmises l'une dans l'autre dans la direction de l'axe du palier et la au moins une section de transition (13.3, 21.3) forment respectivement des segments (Seg.4),
et **en ce que** les segments (Seg.4) de ces sections de contour (13.1, 13.2 ; 21.1, 21.3) et de la au moins une section de transition (13.3, 21.3) forment un segment de palier.

3. Palier lisse hydrodynamique selon la revendication 2,
**caractérisé en ce que**
que la profondeur de contour (t) d'au moins deux des segments (Seg.4) d'un segment de palier qui se rejoignent diffère l'une de l'autre.

4. Palier lisse hydrodynamique selon l'une des revendications 2 ou 3,
**caractérisé en ce que**
**en ce qu'**un ou plusieurs des segments (Seg.4) présentent, dans la direction périphérique, un coin de lubrification (21.1b ; 21.2b ; 21.3b) et une section de transition (21.1a ; 21.2a ; 21.3a) menant au coin de lubrification (21.1b ; 21.2b ; 21.3b) et, facultativement, une surface d'arrêt (21.1c ; 21.2c ; 21.3c).

5. Palier lisse hydrodynamique, selon l'une quelconque des revendications 2 à 4. **caractérisé en ce que**
que la forme de la section transversale des segments (Seg.4) diffère à l'intérieur d'un segment de palier.

6. Palier lisse hydrodynamique selon l'une des revendications 2 à 5.
**caractérisé en ce que**
que des segments de palier sont utilisés dans la plage comprise entre deux et sept.

7. Palier lisse hydrodynamique selon l'une des revendications 1 à 6,
**caractérisé en ce que**
le coin de lubrification (21.1b, 21.2b, 21.3b) présente, dans la direction périphérique et/ou dans la direction axiale, une surface d'appui linéaire ou incurvée, en particulier une géométrie concave.

8. Palier lisse hydrodynamique selon l'une quelconque des revendications 4 à 7, **caractérisé en ce que**
**en ce que** la pente du contour générant la section de transition (21.1a ; 21.2a ; 21.3a) est opposée, dans la direction circonférentielle, à l'augmentation du coin de lubrification (21.1b, 21.2b, 21.3b) qui s'y raccorde.

9. Palier lisse hydrodynamique selon l'une quelconque des revendications 1 à 8, **caractérisé en ce que**
que le rapport entre la profondeur maximale de contour (t-Max) d'un segment dans la section de contour (21.2) (Seg.4) et la hauteur nominale du jeu de palier (C) dans la section de contour 21.2 est choisi dans la plage comprise entre 0,5 ≤ t-max/c ≤ 5.

10. Palier lisse hydrodynamique selon l'une quelconque des revendications 1 à 9, **caractérisé en ce que**
**en ce que** le rapport entre la profondeur maximale de contour (t-Max) d'un segment dans la portion de contour (21.1) (Seg.4) et la hauteur nominale du jeu de palier (C) dans la portion de contour (21.2) est choisi dans la plage comprise entre 0,5 ≤ t-max/c ≤ 6.

11. Palier lisse hydrodynamique selon l'une quelconque des revendications 1 à 10, **caractérisé en ce que**
**en ce que** l'étendue des surfaces d'arrêt (21.1c ; 21.2c ; 21.3c) dans la direction circonférentielle est comprise entre 0 % et 50 % de l'étendue d'un segment (Seg.4) dans la direction circonférentielle.

12. Palier lisse hydrodynamique selon l'une quelconque des revendications 1 à 11, **caractérisé en ce que**
**en ce que** l'extension du coin de lubrification (21.1b ; 21.2b ; 21.3b) dans la direction circonférentielle est comprise entre 30 % et 100 % de la longueur totale du segment (Seg.4) dans cette direction.

13. Palier lisse hydrodynamique selon l'une quelconque des revendications 1 à 12, **caractérisé en ce que**
**en ce qu'**une rainure de lubrifiant (21.2a) est prévue dans au moins un segment de palier, la rainure de lubrifiant (21.2a) s'étendant au moins sur une partie d'une section de contour (13.1, 13.2 ; 21.1, 21.2) ou au moins sur une partie d'une section de contour (13.1, 13.2 ; 21.1, 21.2) et au moins une partie de la section de transition (13.3 ; 21.3).

14. Turbocompresseur comprenant un palier lisse hydrodynamique selon l'une quelconque des revendications 1 à 13.
